# EUROPEAN PATENT APPLICATION

(11) **EP 1 188 913 A1**
(43) Date of publication of application: **20.03.2002**
(21) Application number: 00203229.0
(22) Date of filing: 18.09.2000
(51) Int. Cl.: F02B 51/02, F02F 3/12, F02M 27/02

(54) **Heterogeneous catalysis in internal combustion engines**

(71) Applicant: Neomat S.A., 1219 Luxembourg (LU)
(72) Inventor: Ferro, Sergio, 45100 Rovigo (IT); De Battisti, Achille, 44100 Ferrara (IT)
(74) Representative: Luppi, Luigi

(57) **Abstract**

The present invention relates to an internal combustion engine comprising a combustion chamber characterized in that catalytically active materials having suitable thermal stability and catalytic activity are localised on internal wall surfaces into the combustion chamber and in that the catalytic activity is performed during the combustion reaction for the enhancement of combustion reactions and reduction of pollutants emissions.

## Description

The present invention relates to an internal combustion engine according to the preamble of claim 1 and a catalysis process according to the preamble of claim 14.

The protection of the environment is an increasingly important problem, both in conditioning the legislation of the different countries, and in stimulating people and resources in finding new solutions. In the last years, many efforts have been made and important successes have been obtained: almost everywhere in the world, industrial applications are subjected to limitations concerning both the wastewater discharge and the emission of gaseous products into the atmosphere. Accordingly, the use of catalytically active materials has found considerable interest both in trying to reduce the pollutant emissions of combustion reactions, and in the optimization of wastewaters treatments based, for instance, on photochemical and electrochemical methods.

The current technologies for pollution abatement for vehicle exhaust streams (the most popular application of internal combustion engine) involve the application of devices having the common property of reducing the quantity of one or more gaseous products (H₂S, CO, NOₓ, SOₓ, hydrocarbons) . The chosen device performs its action prior to fuel injection into the combustion chamber or, more usually, prior to exhaust gases emission. Concerning the former solution, Patent US-A-4347811 describes a method for removing hydrogen sulfide (H₂S) from a fuel, prior to its combustion, so as to protect the engine against corrosive wear by H₂S and sulfur oxides formed by burning H₂S in the internal combustion engine. On the other hand, Patent US-A-5307772 is focused on diesel engines and, in particular, on the reduction of NOₓ formation: in this case, a pre-chamber is proposed, localized just after the injection of the fuel and the successive auto-ignition of the mixture. As far as the treatment of exhaust gases emission is concerned, Patents US-A-5323607, 5422085, 5534475, 5584265, 5643542, 5866498, 6033641 and 6058699 describe inventions for the reduction of CO, NOₓ and unburned hydrocarbon content from exhaust gases.

When requested by the catalytic device (for example, Patent US-A-5323607), a heating unit heats the catalyst in order to improve the desired catalytic effect. However, the catalytic activity of all devices depends on the temperature and the process can be carried out only when the temperature is comprised between, nominally, 200 and 600°C. Obviously, the higher limit is hardly encountered in internal combustion engines, the warmer part of the engine being the outlet valve, and successive parts of the engine being in contact with air and therefore cooled down.

Tanaka and Yoshizaki, in Patent US-A-5323607, underline the problems of such devices, in which the exhaust streams are treated just before the discharge: if the catalyst is not sufficiently heated, so as to be sufficiently activated, the purification of exhaust gases cannot be achieved. Accordingly, temperature sensors are used in order to monitor the catalyst temperature, which is increased to the desired interval of operability by means of, for example, electric resistances. More usually, the catalyst is heated by passing the exhaust gases, provided by the internal combustion engine itself. If the temperature of the exhaust gases is thus not high enough, the catalyst cannot be warmed up properly and combustion efficiency is thus not yet high. As a consequence, it may be thought that the purification device does not work as it would do, and the vehicle exhaust streams are discharged in the atmosphere without important (and purifying) modification.

Another invention, related to the limitation of soot production and the emission of unburned hydrocarbons and carbon monoxide, is represented by the Japan Patent No. 2176148 A. In this document, Mitsuhiro suggests to face the internal wall surfaces of the cylinder head, the piston head and the inlet valve head by a heat resisting resin. The claimed results seem to arise from the masking of the metal surfaces, rather than from catalytic activity of the resin itself. However, the possibility of tuning the chemical yield of the combustion reaction, by the simple modification described in the Japan Patent, give further support to the present invention.

The internal combustion engine of the present invention is defined in the characterizing portion of claim 1 and the catalysis process is defined in the characterizing portion of claim 14.

The present invention relates to the application of materials having thermal stability and catalytic activity to the enhancement of combustion reactions, allowing the improvement of the reaction yield and, therefore, the limitation of consumptions and the reduction in the production of partially unburned products. In particular, the proposed application concerns the use of promoters directly into the combustion chamber, so that the promoter itself can take profit of temperature and reaction environment more suitable for its promoting activity.

Object of the present invention is the modification of internal wall surfaces into the combustion chamber, by deposing promoter materials having suitable thermal stability and catalytic activity. In particular, the adopted materials may have their own catalytic activity or the latter can be the consequence of synergistic effects, like the radical spillover well known in heterogeneous catalysis.

The present invention generally relates to internal combustion engines, with the aim of reducing their pollutant emissions. As previously underlined, the prior art suggests many possible solutions to the problem of limiting the amount of noxious substances present into the exhaust gases, and a lot of catalytically active materials have been suggested, in a variety of forms and compositions. However, a common problem can be found in the real application of heterogeneous catalysis: in fact, chemical reactions are effective at high temperature, which means in conditions relatively far from those considered in the prior art. Accordingly, the best application of heterogeneous catalysis is localized where temperatures are very high, i.e. in the closeness of the combustion chamber.

It is therefore object of the present invention the application of catalytically active materials in the combustion chamber and possibly also in the exhaust manifold, i.e. the pipe connecting the cylinder with the expansion chamber. In the prior art, the latter has been the usual location for catalytic reactions, this choice being independent from thermal considerations.

Within the aim of this invention, on the contrary, it has been thought that modifications based on catalysis can be carried out, with higher yield and better results, if the catalytic activity is performed during the combustion reaction. Consequently, in the combustion chamber, the catalyst acts as a promoter for some reaction products, reducing or possibly inhibiting the formation of the undesired ones. From a chemical point of view, the catalyst performs its activity stabilizing certain radicals better than others, and offering alternative paths of reaction and/or facilitating some radicals' formation.

Concerning the engine modification, it will be appreciated by those skilled in the art that the present invention does not require any dedicated adaptation of the engine construction: in fact, the catalyst can be deposited on the piston's head surface and similarly on the surfaces of the inlet and outlet valves. As a result, these parts can be modified independently on the motor's engineering, giving the manufacturers an important aid in reducing the polluting emissions of their engines.

While the nature of the catalytically active material is obviously very important, another object of the present invention is the application of the catalytic mixture to the surfaces of pistons and valves. In fact, different methods can be used, based for example on oxidative pyrolysis, reactive sputtering, chemical vapor deposition and laser-reactive ablation techniques, leading to different surface textures and microstructures and catalytic properties. In all cases, the synthesis of oxide layers can be performed, the preparation temperature being limited from the reactivity of the support (in the upper limit) and the adhesion between the support and the oxide layer, in the lower limit. In order to guarantee the required mechanical stability, the oxide layer should be chosen from the ceramic materials having thermal resistance to combustion temperature, low thermal dilatation coefficient and high thermal shock resistance to cold engine operation. While different types of ceramics can be considered, it is suggested to focus on reducible oxides (e.g. TiO₂, Nb₂O₅, Ta₂O₅, Sb₂O₅, SnO₂, CeO₂ and others), allowing higher catalytic activity for the supported noble metals. The use of reducible oxides, as support for the noble-metal-based catalyst, seems to be of fundamental importance in the obtainment of active sites at the metal-support interface, the catalytic activity originating from the migration and/or the presence of support suboxide species onto metal particle surface.

The catalyst may be deposited as a homogeneous mixture of ingredients, or can be prepared by subsequent modification of the oxide layer acting as support of the catalytically active noble metal. The first solution seems to be more preferable because of the improvement of interactions between noble metal and support, and the formation of more boundaries between them. Moreover, homogeneity at the surface involves the presence of noble-metal particles and/or noble-metal oxide particles decorated by the support, thus increasing the interaction between the two components. Those skilled in the art will appreciate that the homogeneity at the surface does not preclude the opportunity to deposit different catalysts or different catalytic compositions, in order to obtain different effects in different parts of the combustion chamber and neighboring zones.

As known, it is the noble metal or the noble-metal oxide that has catalytic activity, but the reducible oxide, in which the noble metal is dispersed or on which it is deposited, does not act as a simply passive support. The concomitant presence of different phases is necessary in order to give the desired synergistic effect. This is why the catalytically active material cannot be limited to noble metals only: apart from the precious metals selected from the group consisting of gold, iridium, osmium, palladium, platinum, rhenium, rhodium, ruthenium, silver, their oxide and mixtures thereof, suitable active metals are aluminum, antimony, chromium, cobalt, copper, indium, iron, lead, manganese, molybdenum, nickel, niobium, silicon, tantalum, tin, titanium, tungsten, vanadium, zinc, zirconium, rare earth metals, alloys (for example, silicon carbide or silicon nitride) and mixtures thereof or of their oxides.

The modifications described in the present invention apply to internal combustion engines, thus including diesel and Otto-cycle engines; the latter, in particular, can be designed as a two-stroke or a four-stroke engine. As the modification is mainly directed to the combustion chamber and neighboring zones, the present invention can be conveniently applied also to Wankel or Wankel-type engines, possibly supplying a solution for the improvement of fuel economy and pollutants emissions of this engine.

The above description of the present invention discloses an internal combustion engine and a catalysis process. This invention is susceptible to modifications in the methods and materials, as well as alterations in the fabrication methods and equipment. Such modifications will become apparent to those skilled in the art from a consideration of this disclosure or practice of the invention disclosed herein. Consequently, it is not intended that this invention be limited to the specific embodiment disclosed herein, but that it covers all modifications and alternatives coming within the true scope of the invention as embodied in the attached claims.

## Claims

1. An internal combustion engine comprising a combustion chamber **characterized in that** catalytically active materials having suitable thermal stability and catalytic activity are localised on internal wall surfaces into the combustion chamber and **in that** the catalytic activity is performed during the combustion reaction for the enhancement of combustion reactions and reduction of pollutants emissions.

2. The internal combustion engine of claim 1 **characterized in that** a catalyst is deposited on the piston's head surface and on the surfaces of the inlet and outlet valves.

3. The internal combustion engine of claim 2 **characterized in that** these parts can be modified independently on the motor's engineering.

4. The internal combustion engine of claim 1 **characterized in that** the catalyst acts as a promoter for some reaction products allowing the improvement of the reaction yield, the limitation of consumptions and the reduction in the production of partially unburned products.

5. The internal combustion engine of claim 1 **characterized in that** oxidative pyrolysis, reactive sputtering, chemical vapour deposition and laser-reactive ablation techniques can be used for leading to different surface textures and microstructures and catalytic properties.

6. The internal combustion engine of claim 5 **characterized in that** an oxide layer is synthetized as support for the catalyst.

7. The internal combustion engine of claim 6 **characterized in that** the oxide layer is chosen from the ceramic materials having thermal resistance to combustion temperature, low thermal dilatation coefficient and high thermal shock resistance to cold engines operation.

8. The internal combustion engine of claim 1 **characterized in that** catalytically active materials are selected from the group consisting of gold, iridium, osmium, palladium, platinum, rhenium, rhodium, ruthenium, silver, their oxide and mixtures thereof, suitable active metals are aluminium, antimony, chromium, cobalt, copper, indium, iron, lead, manganese, molybdenum, nickel, niobium, silicon, tantalum, tin, titanium, tungsten, vanadium, zinc, zirconium, rare earth metals, alloys (for example, silicon carbide or silicon nitride) and mixtures thereof or of their oxides.

9. The internal combustion engine of claim 6 **characterized in that** the catalyst may be deposited on an oxide layer as a homogeneous mixture of ingredients, or can be prepared by subsequent modification of the oxide layer acting as support of the catalytically active noble metal.

10. The internal combustion engine of claim 6 **characterized in that** the oxide layer can be chosen from reducible oxides, TiO₂, Nb₂O₅, Ta₂O₅, Sb₂O₅, SnO₂ and CeO₂ as support for the noble-metal-based catalyst.

11. The internal combustion engine of claim 1 **characterized in that** it allows to obtain active sites at the metal-support interface.

12. The internal combustion engine of claim 1 **characterized in that** it is a Diesel, Otto-cycle, Wankel or Wankel-type engine.

13. The internal combustion engine of claim 1 **characterized in that** it is a two-stroke or four-stroke engine.

14. A catalysis process **characterized in that** catalytically active materials of any claims 1 to 11 are applied on internal wall surfaces into the combustion chamber of an internal combustion engine and **in that** the catalysis process is performed during the combustion reaction for the enhancement of combustion reactions and reduction of pollutants emissions.
